# DEMANDE DE BREVET EUROPEEN

(11) **EP 3 106 928 A1**
(43) Date de publication de la demande: **21.12.2016**
(21) Numéro de dépôt: 15172344.2
(22) Date de dépôt: 16.06.2015
(51) Int. Cl.: G04B 17/32, G04B 17/34, G04B 13/02

(54) **PROCÉDÉ DE FABRICATION COMPORTANT UNE ÉTAPE DE DÉCOLLETAGE MODIFIÉE**

(71) Demandeur: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Couillard, Yann Luc Raymond

(57) **Abrégé**

L'invention se rapporte à un procédé de fabrication d'une pièce destinée à être soudée comportant une étape de décolletage permettant de former une paroi oblique entre deux surfaces perpendiculaires apte à réduite la surface de contact de la face qui doit être soudée.

## Description

### Domaine de l'invention

L'invention se rapporte à un procédé de fabrication d'une face destinée à être soudée et, plus précisément, une telle face comportant une planéité de surface améliorée.

### Arrière-plan de l'invention

Il est connu du document PCT/EP2015/061774 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne devait pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication avec au moins une surface de contact comportant une planéité améliorée permettant l'assemblage des pièces par soudage.

A cet effet, selon un premier mode de réalisation, l'invention se rapporte à un procédé de fabrication d'une pièce comportant les étapes suivantes :
- se munir d'une barre ;
- décolleter la barre pour former au moins un diamètre comportant une surface sensiblement verticale et une surface sensiblement horizontale ;
caractérisé en ce que l'étape de décolletage forme également une paroi oblique entre la surface sensiblement verticale et la surface sensiblement horizontale afin de réduire ladite surface sensiblement horizontale ou en ce que l'étape de décolletage forme également une paroi courbe autour de ladite surface sensiblement horizontale afin que la surface sensiblement horizontale soit limitée à une ligne.

Selon le premier mode de réalisation, le procédé de fabrication permet avantageusement d'offrir une face avec une surface de soudage réduite, voire la limiter à une ligne de contact, pour diminuer l'interstice à une valeur garantissant son soudage.

De plus, selon un deuxième mode de réalisation, l'invention se rapporte à un procédé de fabrication d'une pièce comportant les étapes suivantes :
- se munir d'une barre ;
- décolleter la barre pour former au moins un diamètre comportant une surface sensiblement verticale et une surface sensiblement horizontale ;
caractérisé en ce que l'étape de décolletage forme également une piqûre entre la surface sensiblement verticale et la surface sensiblement horizontale destinée à réduite la surface sensiblement verticale.

Selon le deuxième mode de réalisation, le procédé de fabrication permet avantageusement afin de garantir une configuration isostatique de l'ajustage de la pièce, afin de diminuer l'interstice d'ajustage à une valeur garantissant son soudage.

Enfin, quel que soit le mode de réalisation, l'invention se rapporte à un procédé de fabrication d'un composant horloger comportant les étapes suivantes :
- former une première pièce à base de métal à partir du procédé selon l'une des revendications précédentes et une deuxième pièce ;
- monter une surface de la première pièce sur une surface de la deuxième partie ;
- souder, par rayonnement électromagnétique du type laser, la surface de la première partie montée sur la surface de la deuxième partie afin de les solidariser.

Conformément à d'autres variantes avantageuses de l'invention :
- la deuxième pièce est à base de silicium ou à base de céramique ;
- la deuxième pièce comporte en outre au moins un revêtement partiel de métal, d'oxyde de silicium, de nitrure de silicium, de carbure de silicium ou d'un allotrope du carbone ;
- la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier-spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document PCT/EP2015/061774 ;
- la figure 5 est une représentation en coupe d'un assemblage selon un premier mode de réalisation de l'invention ;
- la figure 6 est une représentation en coupe d'un assemblage selon une variante d'un premier mode de réalisation de l'invention ;
- la figure 7 est une représentation en coupe d'un assemblage selon une alternative d'un premier mode de réalisation de l'invention ;
- la figure 8 est une représentation en coupe d'un assemblage selon un deuxième mode de réalisation de l'invention ;
- la figure 9 est une représentation en coupe d'un assemblage selon une combinaison des premier et deuxième modes de réalisation de l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

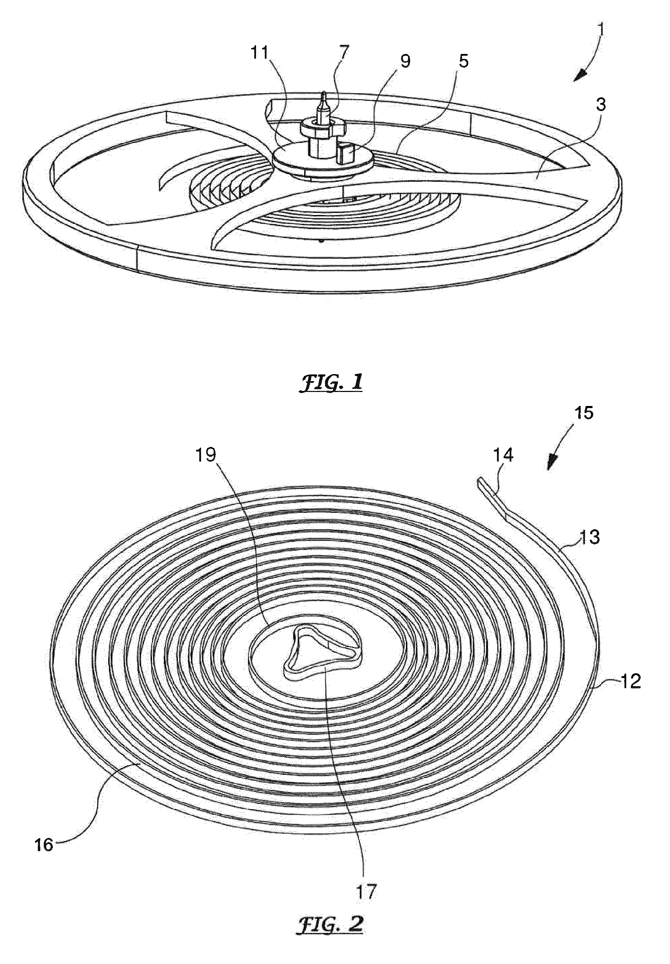

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'axe notamment pour autoriser son centrage par rapport à ce dernier.

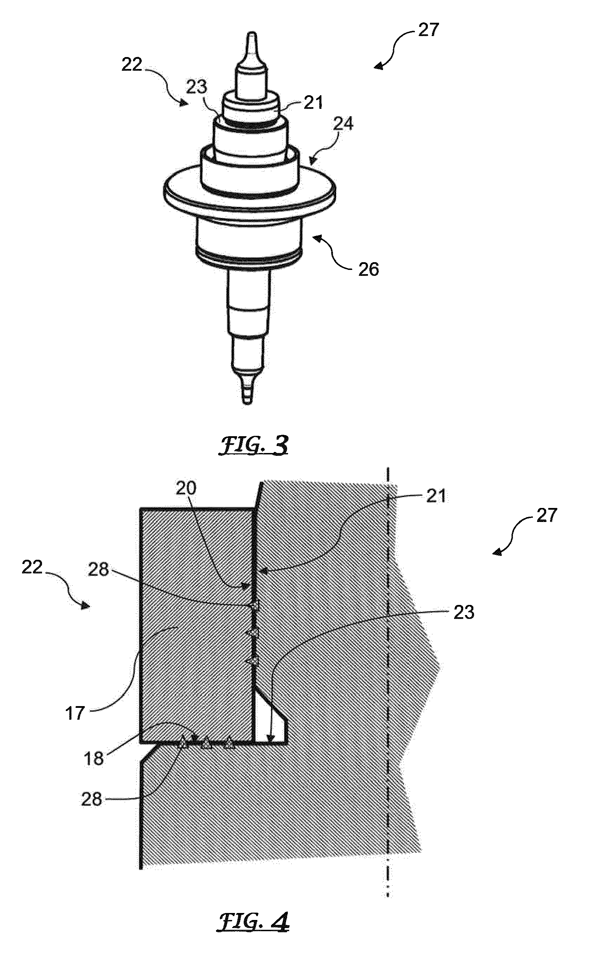

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 sont soudés à la virole 17 comme enseigné dans le document PCT/EP2015/061774.

Toutefois, dans le cadre du développement de l'enseignement du document PCT/EP2015/061774, il est rapidement ressorti que l'interstice entre les pièces ne doit pas excéder 0,5 micromètre sous peine que celles-ci ne puissent pas être soudées.

Selon un premier mode de réalisation, le procédé de fabrication comporte une étape destinée à décolleter la portée de l'arbre afin d'offrir une surface de soudage réduite, voire limiter le contact à une ligne, pour diminuer l'interstice à une valeur inférieure ou égale à 0,5 micromètre.

Le procédé selon le premier mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

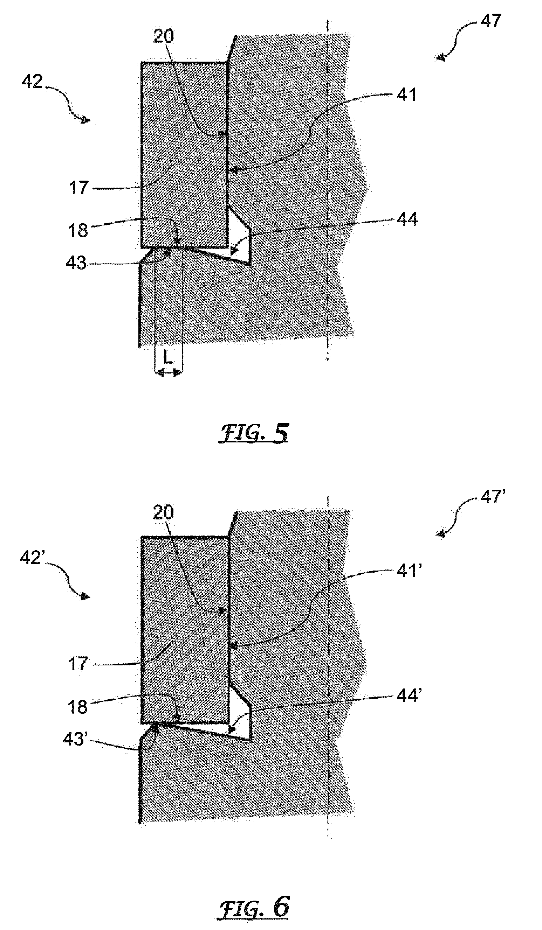

La deuxième étape est destinée à décolleter les différents diamètres nécessaires pour former l'arbre 47 de balancier et notamment le diamètre 42 apte à recevoir la virole 17 du spiral 15. Comme visible à la figure 5, en comparaison de la figure 4, l'étape de décolletage est destinée à former volontairement une paroi oblique 44 partant de la piqûre de l'outil de décolletage vers la portée 43 qui est toujours sensiblement perpendiculaire à la surface de la tige 21 mais selon une largeur L bien plus restreinte que la portée 23 de la figure 4. On comprend dans le cas de l'arbre que la paroi oblique 44 forme ainsi un cône.

Bien entendu, selon une variante illustrée à la figure 6, la deuxième étape de décolletage pourrait même être destinée à former volontairement une paroi oblique 44' partant de la piqûre de l'outil de décolletage vers la portée 43' formant une ligne de contact au lieu de la surface plus restreinte 43 illustrée à la figure 5. On comprend dans le cas de l'arbre que la paroi oblique 44' forme ainsi un cône.

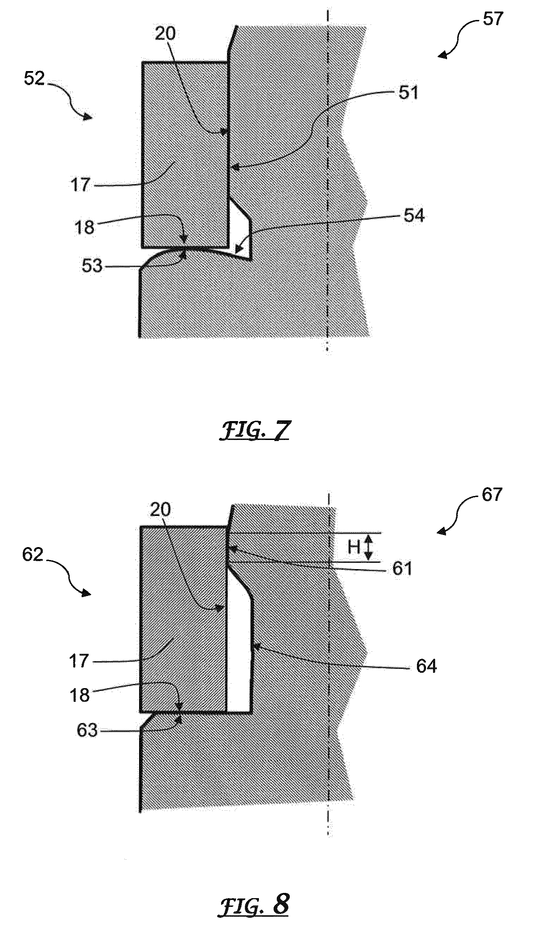

Selon une alternative du premier mode de réalisation illustrée à la figure 7, l'étape de décolletage pourrait être destinée à former volontairement une paroi courbe 54 partant de la piqûre de l'outil de décolletage formant une ligne de contact 53 plus centrée que la ligne de contact 43' illustrée à la figure 6. On comprend dans le cas de l'arbre que la paroi courbe 54 forme ainsi une surface torique.

On comprend donc qu'après les étapes de finition comportant, par exemple, une étape de brunissage et, éventuellement, d'ébarbage, l'arbre obtenu 47, 47', 57 offre une surface 43 de soudage réduite, voire limite le contact à une ligne 43', 53, pour diminuer l'interstice à une valeur inférieure ou égale à 0,5 micromètre.

On comprend donc que, dans une étape finale de soudage, la virole 17 est ajustée sur le diamètre 42, 42' ou 52, c'est-à-dire entre la surface de la tige 41, 41' ou 51 et la surface 43, 43' ou 53, puis est soudée par laser avec une garantie que le spiral 15 et l'arbre 47, 47' ou 57 soient solidarisés.

Selon un deuxième mode de réalisation, le procédé de fabrication comporte une étape destinée à décolleter la tige de l'arbre afin de garantir une configuration isostatique de l'ajustage de la virole sur l'arbre. On comprend qu'il est souhaité que la surface inférieure de la virole puisse s'adapter à la géométrie de la portée, c'est-à-dire puisse suivre la géométrie de la portée avec plus de degré de liberté, afin de diminuer l'interstice à une valeur inférieure ou égale à 0,5 micromètre.

Le procédé selon le deuxième mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

La deuxième étape est destinée à décolleter les différents diamètres nécessaires pour former l'arbre 67 de balancier et notamment le diamètre 62 apte à recevoir la virole 17 du spiral 15. Comme visible à la figure 8, en comparaison de la figure 4, l'étape de décolletage est destinée à former volontairement une piqûre 64 plus prononcée de l'outil de décolletage vers la tige 61 mais selon une hauteur H bien plus restreinte que la tige 21 de la figure 4. On comprend dans le cas de l'arbre que la surface de tige 61 forme ainsi un cylindre.

Bien entendu, selon une variante non illustrée, la deuxième étape de décolletage pourrait même être destinée à former volontairement une piqûre partant de la portée 63 de l'outil de décolletage vers la tige 61 formant une ligne de contact au lieu de la surface plus restreinte 61 illustrée à la figure 5.

On comprend donc qu'après les étapes de finition comportant, par exemple, une étape de brunissage et, éventuellement, d'ébarbage, l'arbre obtenu 67 permet à la surface inférieure 18 de la virole 17 de pouvoir s'adapter à la géométrie de la portée 63, c'est-à-dire puisse suivre la géométrie de la portée 63 avec plus de degré de liberté, afin de diminuer l'interstice à une valeur inférieure ou égale à 0,5 micromètre.

On comprend donc que, dans une étape finale de soudage, la virole 17 est ajustée sur le diamètre 62, c'est-à-dire entre la surface de la tige 61 et la surface 63, puis est soudée par laser avec une garantie que le spiral 15 et l'arbre 67 soient solidarisés.

Bien entendu, la présente invention ne se limite pas à l'exemple illustré mais est susceptible de diverses variantes et modifications qui apparaîtront à l'homme de l'art. En particulier, les premier et deuxième modes de réalisation peuvent être combinés pour bénéficier de leurs effets conjugués.

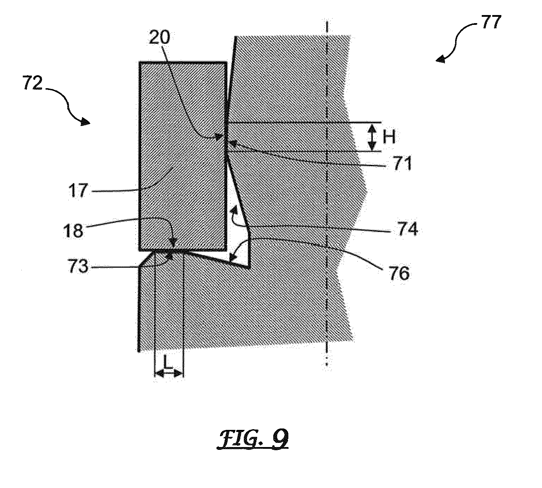

Ainsi, comme visible à la figure 9, l'étape de décolletage pourrait être destinée à former volontairement une paroi oblique 76 partant de la piqûre 74 de l'outil de décolletage formant une surface de contact 53 plus réduite que la surface de contact 23 illustrée à la figure 4. On comprend dans le cas de l'arbre 77 que la paroi oblique 76 forme ainsi un cône. De plus, l'étape de décolletage peut également former volontairement une piqûre 74 plus prononcée de l'outil de décolletage vers la tige 71 mais selon une hauteur H bien plus restreinte que la tige 21 de la figure 4. On comprend dans le cas de l'arbre que la surface de tige 71 forme ainsi un cylindre.

On s'aperçoit alors que l'arbre 77 offre ainsi avantageusement une face 73 avec une surface de soudage réduite pour garantir son soudage mais également une face 71 de contact avec une surface réduite garantissant une configuration isostatique de l'ajustage sur le diamètre 72 de l'arbre 77 afin de diminuer encore d'avantage l'interstice d'ajustage améliorant encore d'avantage son soudage.

## Revendications

1. Procédé de fabrication d'une pièce (27, 47, 47', 57, 67, 77) comportant les étapes suivantes :
- se munir d'une barre ;
- décolleter la barre pour former au moins un diamètre (22, 24, 26, 42, 42', 52, 62, 72) comportant une surface (21, 41, 41', 51, 61, 71) sensiblement verticale et une surface (23, 43, 43', 53, 63, 73) sensiblement horizontale ;
**caractérisé en ce que** l'étape de décolletage forme également une paroi oblique (44, 44', 76) entre la surface (21, 41, 41', 51, 61, 71) sensiblement verticale et la surface (23, 43, 43', 53, 63, 73) sensiblement horizontale afin de réduire ladite surface sensiblement horizontale.

2. Procédé de fabrication d'une pièce (27, 47, 47', 57, 67, 77) comportant les étapes suivantes :
- se munir d'une barre ;
- décolleter la barre pour former au moins un diamètre (22, 24, 26, 42, 42', 52, 62, 72) comportant une surface (21, 41, 41', 51, 61, 71) sensiblement verticale et une surface (23, 43, 43', 53, 63, 73) sensiblement horizontale ;
**caractérisé en ce que** l'étape de décolletage forme également une paroi courbe (54) autour de ladite surface (23, 43, 43', 53, 63, 73) sensiblement horizontale afin que la surface (23, 43, 43', 53, 63, 73) sensiblement horizontale soit limitée à une ligne.

3. Procédé de fabrication d'une pièce (27, 47, 47', 57, 67, 77) comportant les étapes suivantes :
- se munir d'une barre ;
- décolleter la barre pour former au moins un diamètre (22, 24, 26, 42, 42', 52, 62, 72) comportant une surface (21, 41, 41', 51, 61, 71) sensiblement verticale et une surface (23, 43, 43', 53, 63, 73) sensiblement horizontale ;
**caractérisé en ce que** l'étape de décolletage forme également une piqûre (64) entre la surface (21, 41, 41', 51, 61, 71) sensiblement verticale et la surface (23, 43, 43', 53, 63, 73) sensiblement horizontale destinée à réduite la surface (21, 41, 41', 51, 61, 71) sensiblement verticale.

4. Procédé de fabrication d'un composant horloger comportant les étapes suivantes :
- former une première pièce (27, 47, 47', 57, 67, 77) à base de métal à partir du procédé selon l'une des revendications précédentes et une deuxième pièce (15) ;
- monter une surface (21, 23, 41, 43, 41', 43', 51, 53, 61, 63, 71, 73) de la première pièce (27, 47, 47', 57, 67, 77) sur une surface (18, 20) de la deuxième partie (15) ;
- souder, par rayonnement électromagnétique du type laser, la surface (21, 23, 41, 43, 41', 43', 51, 53, 61, 63, 71, 73) de la première partie (27, 47, 47', 57, 67, 77) montée sur la surface (18, 20) de la deuxième partie (15) afin de les solidariser.

5. Procédé selon la revendication précédente, **caractérisée en ce que** la deuxième pièce (15) est à base de silicium ou à base de céramique.

6. Procédé selon la revendication précédente, **caractérisée en ce que** la deuxième pièce (15) comporte en outre au moins un revêtement partiel de métal, d'oxyde de silicium, de nitrure de silicium, de carbure de silicium ou d'un allotrope du carbone.

7. Procédé selon l'une des revendications 4 à 6, **caractérisée en ce que** la première pièce (27, 47, 47', 57, 67, 77) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.
